# EUROPÄISCHE PATENTANMELDUNG

(11) **EP 2 902 346 A1**
(43) Veröffentlichungstag der Anmeldung: **05.08.2015**
(21) Anmeldenummer: 15151269.6
(22) Anmeldetag: 15.01.2015
(51) Int. Cl.: B65G 65/42, B65G 65/46, A01C 3/06, B60P 1/42

(54) **Container für schwerfließende Schüttgüter**

(30) Priorität: 03.02.2014 DE 102014101259
(71) Anmelder: GETproject GmbH & Co. KG, 24109 Kiel (DE)
(72) Erfinder: Götz, Johann, 24105 Kiel (DE)
(74) Vertreter: Lobemeier, Martin Landolf

(57) **Zusammenfassung**

Container (1) zur Aufnahme eines Schüttgutes (7) mit einer bodenseitig angeordneten Fördereinrichtung (3), einer in Förderrichtung angeordneten Austragsöffnung mit einer der Austragsöffnung benachbart angeordneten Abtrageinrichtung zum Ausbringen des Schüttguts (7) aus dem Container (1), dadurch gekennzeichnet, dass die Abtrageinrichtung eine quer zur Förderrichtung verfahrbare, eine Schnittkante entlang der Front des Schüttguts (7) erzeugende Schneckenwelle (4) ist, die sich von der Oberseite des Containers (1) in den Container (1) erstreckt.

## Beschreibung

Die Erfindung betrifft einen Container zur Aufnahme eines Schüttgutes mit einer bodenseitig angeordneten Fördereinrichtung, einer in Förderrichtung angeordneten Austragsöffnung mit einer Abtrageinrichtung zum Ausbringen des Schüttguts aus dem Container.

Derartige Container sind aus offenkundiger Vorbenutzung bekannt. Zum Beispiel weisen Miststreuwagen einen mit einem Kratzboden ausgestatteten Behälter auf, wobei der Kratzboden den Mist einer Abtrageinrichtung zuführt, die regelmäßig aus quer zur Förderrichtung, horizontal angeordneten Wellen besteht, die den Mist zerkleinern, abtragen und aus dem Behälter auswerfen.

Nach ähnlichem Prinzip arbeiten Container zum Zwischenlagern von Biomasse, beispielsweise bei Biogasanlagen, die wahlweise mit einem Kratz- oder Schubboden oder mit einem Förderband ausgestattet sind, womit die Biomasse einer fest positionierten Fördereinrichtung, z.B. einer Förderschnecke zuführt.

Mit den bekannten Containern ist eine kontrollierte chargenweise Abfuhr von zwischengelagertem Biomasseschüttgut nach Gewicht realisierbar und allenfalls bedingt ein kontinuierlicher dosierter Austrag. Ein Austrag von Schüttgütern mit wechselnden Eigenschaften mit kleiner Austragsleistung und hoher Dosiergenauigkeitist damit nicht realisierbar oder nur mit einem hohen Aufwands zur Anpassung des Containers an das jeweilige Schüttgut.

Aufgabe der vorliegenden Erfindung ist es daher, einen einfach aufgebauten Container zu schaffen, der mit einfachen Mitteln an die Fließeigenschaften des Schüttgutes angepasst und mit dem der Abtrag aus dem Container exakt gesteuert werden kann.

Diese Aufgabe wird erfindungsgemäß durch den Container mit den Merkmalen von Anspruch 1 gelöst. Die Unteransprüche geben vorteilhafte Ausgestaltungen der Erfindung wieder. Grundgedanke der Erfindung ist es, die kontinuierliche Dosierung von insbesondere schwerfließenden Schüttgütern dadurch zu ermöglichen, dass eine Schneckenwelle an der Oberseite eines nach oben hin offenen Containers an der Schüttgutkante entlanggeführt wird und den Ab- und Austrag durch die (an der offenen Schmalseite gebildete) Austragsöffnung mittels auf die Schüttgutkante des Schüttguts wirkender Scherkräfte bewirkt. Hierzu ist die mit einem eigenen Antrieb ausgestattete Schneckenwelle in einem horizontal verfahrbaren Schlitten einseitig gelagert. Die Schneckenwelle wirkt also nicht wie herkömmlich als Bestandteil einer Förderanlage zum Transport von Schüttgut, sondern als ein eine Schnittkante entlang der Front des Schüttguts erzeugendes Schneidwerkzeug.

Die Anpassung der Leistung, mit der die Biomasse ausgetragen wird, erfolgt in Abhängigkeit von der Gewichtsabnahme der Biomasse im Container entweder durch kontinuierliche Veränderung der Fördergeschwindigkeit des Kratzbodens oder durch einen schrittweisen Vorschub des Kratzbodens. Bevorzugt wird ein schrittweiser Vorschub, bei dem der Kratzboden um ein der Austragsleistung entsprechendes Stück vorwärts bewegt wird, wenn die Schneckenwelle die jeweilige Endlage erreicht hat.

Mit dem erfindungsgemäß ausgebildeten Container können Schüttgüter mit wechselnden Eigenschaften, insbesondere auch Biomasse unterschiedlicher Art und Herkunft, speziell halmartige Biomasse, zwischengelagert und kontrolliert ausgetragen werden. Lediglich eine Anpassung der der Neigung der Schneckenwelle kann erforderlich werden.

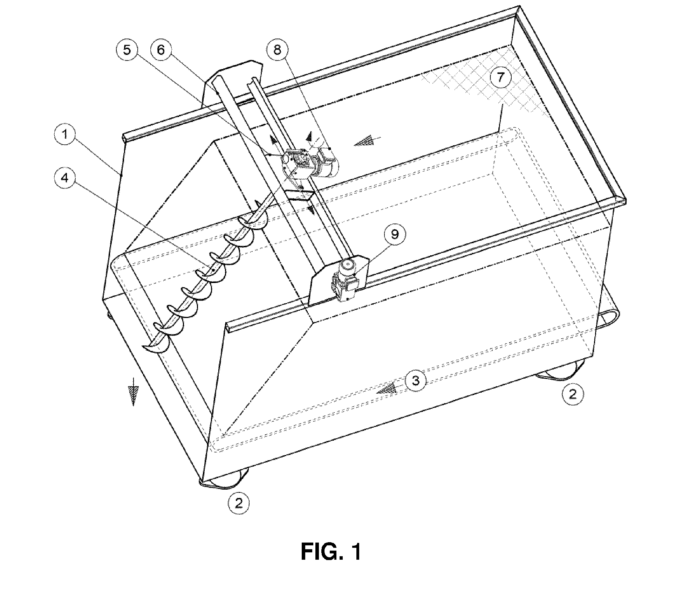

Die Erfindung wird anhand eines in der einzigen Fig. 1 dargestellten, bevorzugt ausgestalteten Ausführungsbeispiels nach der Erfindung näher erläutert:

Fig. 1 zeigt eine perspektivische Ansicht eines die Erfindung veranschaulichenden Containers. Der Container 1 ist zur Aufnahme eines Schüttgutes 7, bevorzugt von Biomasse, eingerichtet. Er weist eine bodenseitig angeordnete Fördereinrichtung 3 auf, eine in Förderrichtung angeordnete Austragsöffnung und eine an dem einen Ende der Fördereinrichtung 3, der Austragsöffnung benachbart angeordnete Abtrageinrichtung zum Ausbringen der Biomasse aus dem Container 1.

Die wirkende Abtrageinrichtung ist erfindungsgemäß als eine quer zur Förderrichtung verfahrbare Schneckenwelle 4 ausgebildet, die sich von der Oberseite des Containers 1 in den Container 1 erstreckt. Insbesondere erstreckt sich die Schneckenwelle 4 über die maximale Höhe des vom Container 1 aufzunehmenden Schüttgutes 7 und ist im Schüttwinkel des vom Container 1 aufzunehmenden Schüttgutes 7 geneigt, wobei das freie Ende der Schneckenwelle 4 besonders bevorzugt in der Ebene der Fördereinrichtung 3 angeordnet ist. Dadurch wird erreicht, dass die Biomasse entlang der Schnittkante der Schneckenwelle am Schüttgut herabrieselt und aus dem Container herausfällt (siehe den Pfeil in Fig. 1).

Zu Steuerung des Schüttgutabtrags im Containers ist weiter bevorzugt eine das Gewicht des Containers 1 erfassende Wiegeeinrichtung 2 vorgesehen.

Der erfindungsgemäße Container 1 kommt wie folgt zu Einsatz:

Zum Verschneiden von Biomasse unterschiedlicher Art wird der Container 1 schichtweise in dem gewünschten Mischungsverhältnis mit den entsprechenden Materialien 7 gegenüber der Schneckenwelle 4 befüllt. Der Schlitten 5 mit der Schneckenwelle 4 wird in eine der angegebenen Richtungen an der Front der Schüttung 7 bis zur Endlage vor der jeweiligen Seitenwand des Containers 1 bewegt und trägt dabei Material von der Front der Schüttung ab.
Bei Erreichen der Endlage wird der Inhalt des Containers 1 mit dem Kratzboden / Förderband 3 um einen definierten Weg vorgeschoben, woraufhin die Schnecke 4 sich in die entgegengesetzte Richtung bewegt und wiederum eine Schicht des Schüttgutes abträgt. Der Vorschub des Kratzbodens oder Förderbandes 3 wird gesteuert in Abhängigkeit von der zeitlichen Gewichtsabnahme des Containers 1, gemessen durch die Wiegeeinrichtung 2. Die Förderschnecke 4 erhält dabei eine (automatisch oder manuell einstellbare) Neigung, die eine stabile Front der Schüttung 7 sicherstellt.

## Patentansprüche

1. Container (1) zur Aufnahme eines Schüttgutes (7) mit einer bodenseitig angeordneten Fördereinrichtung (3), einer in Förderrichtung angeordneten Austragsöffnung mit einer der Austragsöffnung benachbart angeordneten Abtrageinrichtung zum Ausbringen des Schüttguts (7) aus dem Container (1),
**dadurch gekennzeichnet, dass**
die Abtrageinrichtung eine quer zur Förderrichtung verfahrbare, eine Schnittkante entlang der Front des Schüttguts (7) erzeugende Schneckenwelle (4) ist, die sich von der Oberseite des Containers (1) in den Container (1) erstreckt.

2. Container (1) nach Anspruch 1, **dadurch gekennzeichnet, dass** sich die Schneckenwelle (4) über die maximale Höhe des vom Container (1) aufzunehmenden Schüttgutes (7) erstreckt.

3. Container (1) nach einem der vorhergehenden Ansprüche, **dadurch gekennzeichnet, dass** die Schneckenwelle (4) im Schüttwinkel des vom Container (1) aufzunehmenden Schüttgutes (7) geneigt ist.

4. Container (1) nach einem der vorhergehenden Ansprüche, **dadurch gekennzeichnet, dass** das freie Ende der Schneckenwelle (4) in der Ebene der Fördereinrichtung (3) angeordnet ist.

5. Container (1) nach einem der vorhergehenden Ansprüche, **gekennzeichnet durch** eine das Gewicht des Containers (1) erfassende Wiegeeinrichtung (2).
